Europäisches Patentamt

European Patent Office

Office européen des brevets

(11) Publication number: **0 065 415**

**B1**

(12) **EUROPEAN PATENT SPECIFICATION**

(45) Date of publication of patent specification: **20.08.86**

(51) Int. Cl.⁴: **B 29 C 41/26**

(21) Application number: **82302445.0**

(22) Date of filing: **13.05.82**

(54) Polymeric film casting and apparatus therefor.

(30) Priority: **14.05.81 US 263576**

(43) Date of publication of application:
**24.11.82 Bulletin 82/47**

(45) Publication of the grant of the patent:
**20.08.86 Bulletin 86/34**

(84) Designated Contracting States:
**BE DE FR GB LU**

(56) References cited:
**US-A-2 754 544**
**US-A-2 779 684**
**US-A-3 142 866**
**US-A-3 422 494**
**US-A-3 853 447**
**US-A-3 947 168**
**US-A-4 038 354**

(73) Proprietor: **E.I. DU PONT DE NEMOURS AND COMPANY**
**1007 Market Street**
**Wilmington Delaware 19898 (US)**

(72) Inventor: **Steinberg, Neil Ira**
**106 Silver Creek Court**
**Greer South Carolina 29651 (US)**

(74) Representative: **Pett, Christopher Phineas et al**
**Frank B. Dehn & Co. European Patent Attorneys**
**Imperial House 15-19 Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to the casting of polymeric film, and to an improved process and apparatus therefor.

Background art

In Alles and Saner, US—A—2,627,088, there is disclosed a process of preparing photographic film which includes casting a molten highly polymeric polyester into an unsupported sheet of film, the polyester being also capable of being spun into filaments, which when cold drawn, exhibit, by characteristic X-ray patterns, molecular orientation along the fiber axis. The properties of such film may be further enhanced by a post casting treatment of the type disclosed by Alles US—A—2,779,684 to provide a highly dimensionally stable polyester film suitable for use in the photographic industry.

Traditionally, the casting procedure for such film involves extruding molten polymer onto a casting wheel at a temperature sufficiently high to assure good flow properties for the extrudate during the extrusion process, and then quenching said extrudate to provide a self-supporting web of film, which is further treated as shown in Alles above. The purpose of the quenching process is to cool the molten polymer to a temperature below its glass transition temperature through the bulk of the cast web to form a permanently self-supporting web which may be then stored or subjected to other treatment as desired. Commonly the casting wheel upon which the molten molten is extruded also serves to quench the film. To that end, the casting wheel is hollow and a coolant fluid is circulated within said wheel to remove heat from the surface of the web supported on the wheel. Simultaneously the outer surface of the cast web may also be cooled, using air impingement, cooling baths, chilled rolls, or combinations thereof. US—A—3,853,447 discloses a combination casting and quenching apparatus which is useful in providing a high quality quenched web by employing a combination of the aforementioned cooling techniques.

While the use of combined casting and quenching wheels has proven satisfactory for the production of high quality polyester film, problems begin to surface when higher and higher production rates are desired. Since heat must be removed from the molten polymer while on the casting wheel, either (1) the size of the wheel must be increased as the production rate is increased, or (2) heat must be removed from the polymer at a faster rate, or both. At the same time, the casting wheel must be maintained true to a high degree of accuracy since it is the distance between the extruder lip and the outer wheel surface that determines the final product thickness and, even more important, the thickness uniformity of the cast web. The casting wheel is subjected to substantial stresses because of temperature fluctuations ranging from (a) over 275°C at the point where the molten polyer contacts the wheel surface, to (b) below 75°C at the point where the polymer has been cooled to below it glass transition temperature, to (c) the coolant fluid temperature of about 15°C. In addition to the above, an axial temperature gradient tends to form on the casting surface because the extreme ends do not carry any polymer and are exposed to the atmosphere and consequently to room temperature. The resulting distortion of the casting surface can be fatal to the success of the casting operation, a problem which is discussed in Pabo US—A—3,142,866. To prevent such distortion or deformation it is common practice either to go to casting wheels of increased size and massive construction or to adopt complicated wheel structures as shown in Pabo above. However, the coolant fluid can only remove heat at a finite rate from the interior surface of the casting wheel. Thus, the rate of production as measured in terms of pounds of polymer per hour for a given installation appears limited by engineering factors related to the casting wheel and coolant heat-removing ability.

Brief summary of the invention

We have now surprisingly discovered that the production capacity of a system which involves casting a molten web of thermoplastic film-forming polymer on the peripheral surface of a cooled casting wheel may be greatly increased without any loss in film thickness uniformity by reducing the shell thickness of the wheel relative to the diameter rather than increasing its diameter. What is surprising is the discovery that reducing the shell thickness actually reduces the wheel deformation instead of increasing it. The overall process comprises cooling the molten web on the casting surface of the wheel to a temperature and depth sufficient to permit stripping of the web from said casting surface by a cooling of the wheel and thereafter stripping the web from the casting surface, characterized by providing a casting wheel wherein, for a given diameter, rotational speed and cooling rate, the shell thickness is such that the surface of the molten web in contact with the casting wheel is cooled to a temperature below the glass transition temperature of the polymer to a depth not exceeding 25% of the polymer web thickness as cast whilst still being effective to provide a maximum permanent local shell deformation of the wheel at the point where the molten polymer first contacts the wheel surface of about 0.002 inches (0.051 mm) in the radial direction.

Typically, the thermoplastic film-forming polymer is a polyester, more particularly polyethylene terephthalate and the molten web is cast at a temperature desirably of at least 265°C.

To practice this process we also provide a film casting wheel which comprises:

a hollow body member having a tubular portion forming a shell of heat conductive material, the curved external surface of which constitutes a casting surface onto which in use a stream of molten thermoplastic polymer is to be deposited,

and having end walls of heat conductive material substantially closing the ends of said tubular portion ank directly connected thereto so as to be in a heat conductive relationship therewith;

means for supporting said body member for rotation about the axis of said tubular portion;

means for filling said hollow body member with a cooling liquid,

and means for circulating said cooling liquid into and out of said body member while it is rotating in order to control the temperature of said casting surface; characterized in that the casting wheel has a shell thickness of about 0.7 inches (17.8 mm) and a diameter of about five feet (1.5 m). The shell thickness is effective when in use to cool cast polymer in contact with the surface thereof to a temperature below the glass transition temperature of the polymer to a depth not exceeding 25% of the polymer web thickness as cast, whilst still being effective to provide a maximum permanent local shell deformation thereof at a point where, in use, the molten polymer first contacts the wheel surface of about 0.002 inches (0.051 mm) in the radial direction. It goes without saying that the total thermal stress-induced deformation should not exceed the elastic limit of the construction material of the wheel shell.

The invention may be more clearly understood by reference to the following drawings, which are by way of example only and in which:

Fig. 1 is a schematic representation of an end view, partly in section, of a casting wheel of this invention.

Fig. 2 shows the casting wheel prior to the application of heat stresses.

Figs. 3, 4 and 5 illustrate the casting wheel deformation due to the combined effects of casting a hot polymer web on a portion of the surface area of the internally cooled hollow casting wheel.

Fig. 6 is a graphic representation of the cooling capacity of a casting wheel as a function of shell thickness.

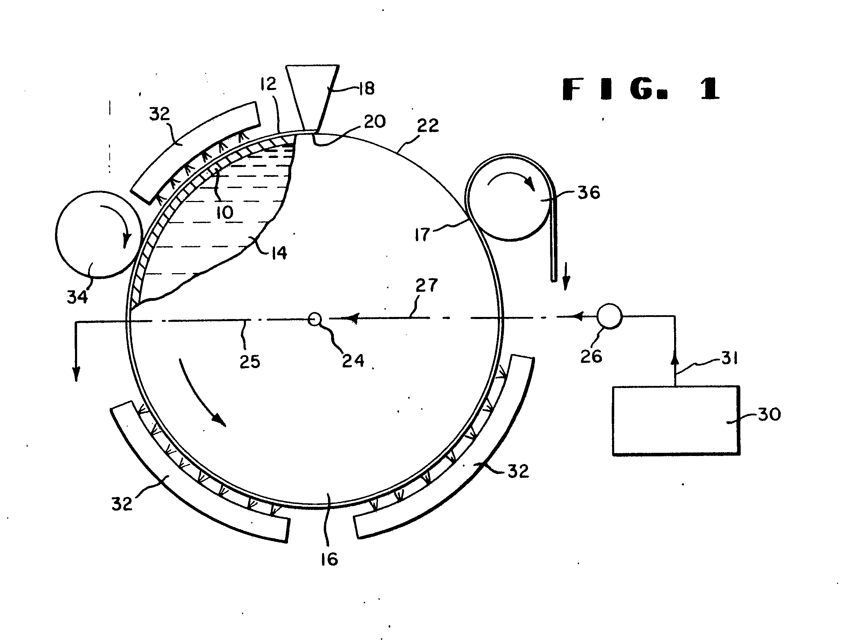

In Fig. 1, a casting wheel 16 having a shell 10, illustrated in cross-section, is positioned under an extrusion device 18 which forms a nip 20 with the surface 22 of the casting wheel. The latter is supported along its axis 24 and a motor drive, not shown, rotates the wheel in the direction of the arrow. The wheel has end walls substantially closing the wheel (not shown). A coolant fluid 14 from a reservoir 30 is supplied to the casting wheel 16 through a pump 26 and a piping system generally denoted as 31, 27 and 25. Coolant thus enters the wheel, circulates within, and exits, carrying away heat from the inner surface of the shell and controlling its temperature.

In operation, a web of molten polymer 12, extruded through extruder 18 and nip 20, is carried by the rotating casting wheel 16 until it reaches a point 17 by which time it has formed a skin layer on the underside contacting the wheel, sufficient to allow stripping. The outer web surface may also be subjected to accelerated cooling by contact with a gaseous or liquid coolant, e.g., by air impingement through a system of air nozzles generally indicated at 32. A cool calendering roll 34 assures good contact between the molten web 12 and the casting surface 22 and also serves to smooth irregularities on the outer surface of the cast web.

As the web reaches point 17 on the casting wheel it is stripped by takeoff roll 36 and advanced for further treatment (not shown).

The transfer of heat from molten polymer web 12 through the wheel shell 10 into the coolant 14 is schematically shown in Fig. 1. We have found the rate of heat transfer q to be dependent on two processes. First, heat is conducted through the wheel shell 1, a conduction process, and then it is removed by the coolant through a convection process across the wheel coolant interface. For the purpose of describing this invention the interfacial heat transfer between the polymer and the wheel outer surface 22 is ignored. The above described heat transfer process may be expressed in mathematical form as:

$$q = UA\Delta T$$

where

U represents the overall heat transfer coefficient,

A represents the contact area between the polymer and the wheel and

$\Delta T$ is the mean temperature difference between the polymer surface and the coolant.

It may be seen from this relationship that increasing the overall heat transfer coefficient will result in greater heat transfer q and therefore higher cooling capacity for a given wheel. The overall heat transfer coefficient is the composite of the conductive heat coefficient $h_w$ for the casting wheel, and the convective heat transfer coefficient between the wheel and coolant interface $h_c$. This relationship may be represented by the equation

$$\frac{1}{U} = \frac{1}{h_w} + \frac{1}{h_c}$$

In the past a great deal of effort has gone into increasing the convective heat transfer coefficient which is dependent upon the cooling passage design, the average coolant velocity, and the coolant fluid heat transfer properties. There comes a point, however, where further increases in that coefficient will only yield a small increase in the overall coefficient. This is because of the reciprocal addition relation between the overall coefficient and the individual coefficients given above in which increasing the value of $h_c$ while holding $h_w$ constant has a diminishingly small effect on the overall coefficient. Table I shows the effect of increasing $h_w$ from a nominal value to infinity for a given value of $h_c$ in terms of % change in the overall coefficient.

## TABLE 1

| U | $h_w$ | $h_c$ | % Change |
|---|---|---|---|
| 95 | 130 | 350 | — |
| 110 | 130 | 700 | 16% |
| 130 | 130 | Infinity | 36% |

The term $h_w$ which characterizes the conductive heat transfer through the shell of the wheel is dependent upon the heat transfer properties of the material of construction and the thickness l of the wheel. If k is the thermal conductivity of the wheel shell material, then

$$h_w = \frac{k}{l}.$$

Thus a thinner shell would change $h_w$. The effect of this coefficient change is shown in Table II.

## TABLE II

| U | $h_w$ | $h_c$ | % Change | l |
|---|---|---|---|---|
| 95 | 130 | 350 | — | 1.3 inches (33.02 mm) |
| 142 | 240 | 350 | 49% | 0.7 inches (17.78 mm) |

The aforesaid determines the important elements in maximizing the rate of heat removed from the polymer through the casting wheel shell. However, none of the above considerations is of great importance when the heat transfer through the polymer bulk is taken into account, as the thermal conductivity of a molten polymer such as a polyethylene terephthalate is the major bottleneck in rapidly cooling the cast web. However, it is not necessary according to the process of this invention to completely cool the cast polymer to below its glass transition temperature. The complete cooling process may be divided into two distinct heat transfer processes: stripping and bulk cooling. Maximum casting capacity may therefore be defined as the point where either of those becomes limiting.

At the stripping limit the polymer sticks to the casting wheel. To break the adhesive forces which develop between the polymer and the casting wheel, a thin layer of polymer in contact with the casting wheel should be cooled below the glass transition temperature. When thus cooled, this layer begins to contract, generating a stress which breaks the adhesion forces holding the polymer on the wheel and allows the as-cast sheet to release from the wheel.

When the stripping temperature becomes a limitation to the dwell time of the polymer on the casting wheel the heat transfer coefficient of the casting wheel shell becomes significant since the cooling of the polymer bulk is of no further interest. It is only under these circumstances that the shell thickness becomes a critical element, and it is here that we have found that a reduction in shell thickness offers substantial improvement in casting rates. This is illustrated in Fig. 6 in which the casting rate in pounds of polymer per hour is plotted against the shell thickness of a five foot (1.52 m) diameter casting wheel. Two curves are developed for the case where a 0.090 inch (2.29 mm) thick film is cast. Curve No. 1 is the theoretical maximum rate, calculated for the case where stripping occurs when an infinitesimal layer has cooled to below the glass transition temperature. Curve No. 2 is calculated for the case in which the film is stripped at the point when a 0.0045 inch (0.114 mm) layer has formed at a temperature below the glass transition temperature. Both curves are for a polyethylene terephthalate film cast at a temperature of 285°C and having a glass transition temperature of 75°C.

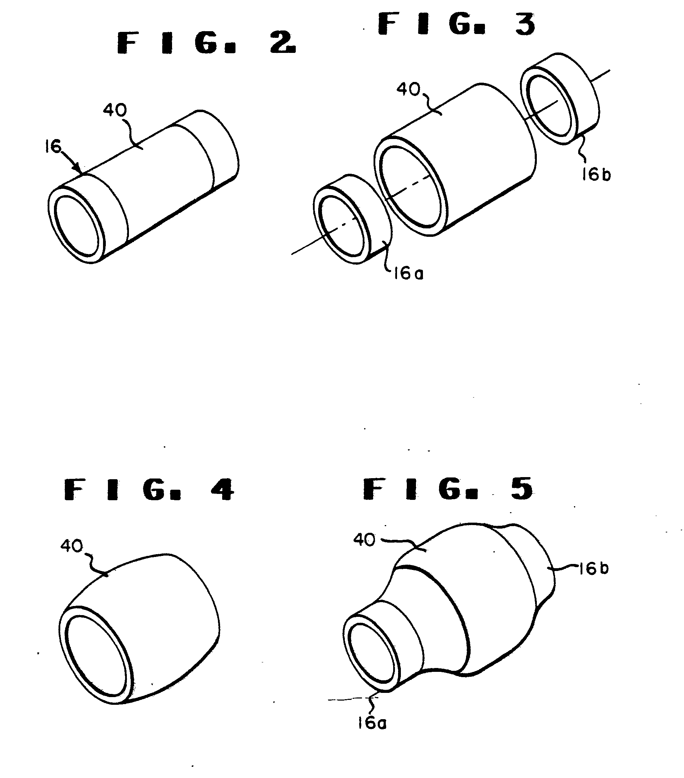

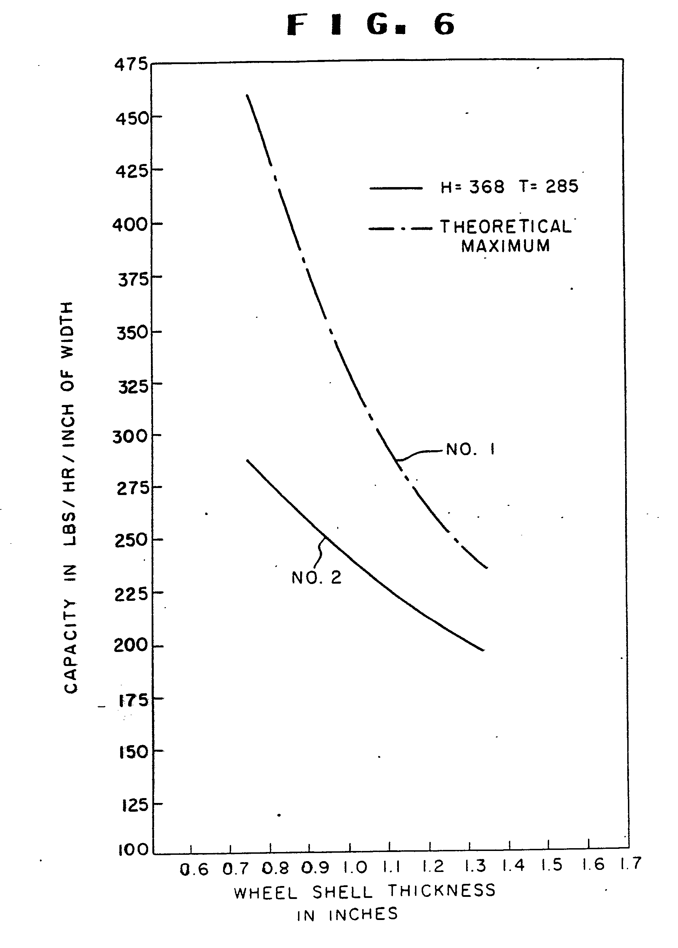

It is clear from the above that thinner shell casting wheels greatly increase the rate at which a given casting wheel may operate. However, as already mentioned before, the casting wheel is subjected to a variety of thermal stresses. This is depicted in Figs. 2—5. Fig. 2 illustrates a cylindrical casting wheel 16 upon which is to be cast a molten polymer web which does not cover the full length of the wheel, but only the annular band 40. In the situation depicted in Fig. 3 (immediately following casting) the end portions 16a, 16b, shown as severed from the wheel are still cold and want to retain their original size, but the hot annular band 40 has expanded to a larger diameter. As heat diffuses radially through the shell to the coolant it causes annular band portion 40 to assume a barrel shape (bulge), depicted in Fig. 4. This results because the inside wall of the shell is cooler than the outside and expands to a lesser degree. This, combined with the distortion illustrated in Fig. 3, produces the deformation illustrated (greatly exaggerated) in Fig. 5. Of course, such distortions would interfere with maintaining a uniform casting nip between the extruder and the casting surface, which is necessary in order to produce a uniform thickness web. Conventional casting wheels have therefore been massive in order to provide the structural integrity necessary.

The exaggerated deformation shown in Fig. 5 is acceptable only if it is limited such that it will not exceed the elastic limits of the materials of construction of the casting wheel. Otherwise, permanent deformation of the casting surface will result, because of the thermal stresses illustrated in Figs. 2—5. If that occurs, the wheel will no longer expand into a repeatedly predictable shape, but instead the distortions will be accentuated and product uniformly will suffer. But as long as the deformation remains below the elastic limit of the materials of construction, the wheel will return to its original shape at the cessation of operations. This makes it possible to accurately predict the shape of the wheel as distorted under thermal stress and to compensate for it through changes in the design of the extruder lips or the subsequent web treatment following the quenching process or both. What is important is that the deformation be predictable and repeatable, and, in order for that to occur, the thickness of the material must be sufficient so that when stressed under the thermal variations discussed above, it will not stretch beyond its elastic limit and be permanently deformed. As mentioned above again, the casting wheels of the past have therefore been massive to provide the structural integrity necessary.

As pointed out earlier, it has now been surprisingly found that making the casting wheel with a thinner shell does not result in greater deformation, such as illustrated in Figs. 2—5, but instead the degree of deformation and the thermal stresses appear to actually lessen as the shell thickness is reduced. Of course, the reduction in shell thickness cannot exceed the safety limits established by the ASME pressure vessel design code.

Another important criterion in selecting the minimum shell thickness is local transient deformation, such as would occur if, for instance, some impurity or debris were present in the cast polymer, or a minor temperature fluctuation created a small amount of higher viscosity polymer melt. As such harder material is extruded it presses onto the shell surface at the extrusion point with more pressure than normal and locally depresses the shell at that point to a greater degree than if normally would. Hence, the shell thickness must be selected so that this localized deformation will not produce a permanent radial deformation in excess of 0.002 inches (0.051 mm).

In a specific embodiment employing a polyester film, molten polyethylene terephthalate was extruded onto a conventional 5-foot (1.52 m) diameter casting wheel having a shell thickness of 1.3 inches (33.02 mm). The molten polymer has a "as cast" thickness of 0.090 inches (2.29 mm) at a temperature of 285°C, and was cooled to a wheel side surface temperature of less than 75°C at the output of the casting wheel. When the shell thickness of the casting wheel is reduced from 1.3 inches (33.02 mm) to a thickness of 0.7 inches (17.78 mm) the wheel adequately satisfies the several criteria disclosed above, providing a three-fold safety margin. At the same time, as shown in Fig. 6, when a 0.0045 inch (0.114 mm) skin is allowed to form on the casting surface prior to stripping, the rate of production increases by almost two-fold.

While the invention has been described in connection with the casting of a polyester film, it should be understood that the invention is not limited to this but is also applicable to the casting of analogous thermoplastic film-forming polymers, such as for example polycarbonates and polyolefins.

**Claims**

1. A method of forming a polymeric film comprising casting a molten web of a thermoplastic film-forming polymer (12) on the surface (22) of a rotating casting wheel (16) having a given shell-thickness relative to the diameter thereof, cooling the molten web (12) on the casting surface (22) of the wheel to a temperature and depth sufficient to permit the stripping of it from said casting surface (22) by a cooling of the wheel (16), and subsequently stripping the web (12) from the casting surface (22); characterised by providing a casting wheel (16) wherein, for a given diameter, rotational speed and cooling rate, the shell thickness thereof is such that the surface of the molten web in contact with the casting wheel (16) is cooled to a temperature below the glass transition temperature of the polymer to a depth not exceeding 25% of the polymer web thickness as cast whilst still being effective to provide a maximum permanent local shell deformation of the wheel at the point where the molten polymer first contacts the wheel surface of about 0.002 inches (0.051 mm) in the radial direction.

2. A process as claimed in claim 1 wherein the polymer is polyethylene terephthalate and the molten web (12) is cast at a temperature of at least 265°C.

3. A process as claimed in claim 1 or claim 2 wherein the surface of the molten web (12) remote from the casting wheel (16) is cooled and hardened whole on the casting surface (22) by contact with a gaseous or liquid coolant.

4. A process as claimed in any of claims 1 to 3 wherein the casting wheel (16) has a shell thickness of about 0.7 inches (17.8 mm) and a diameter of about 5 feet (1.5 m).

5. A wheel (16) for use in forming a self-supporting film of thermoplastic polymer for cooling to its setting point and comprising: a hollow body member having a tubular portion forming a shell (10) of heat conductive material, the curved external surface of which provides a casting surface (22) onto which in use a stream of molten thermoplastic polymer is to be deposited and having end walls of heat conductive material substantially closing the ends of said tubular portion and directly connected thereto so as to be in a heat conductive relationship therewith; means for supporting said body member for rotation about the axis (24) of said tubular portion; and means for filling said hollow body member (27, 31, 25) with a cooling liquid and for circulating said cooling liquid (26) into and out of said body member while it is rotating in order to control the temperature of said casting surface; characterized in that the casting wheel (16) has a shell thickness of about 0.7 inches (17.8 mm) and a diameter of about five feet (1.5 m).

## Patentansprüche

1. Verfahren zur Bildung einer polymeren Folie durch Gießen einer geschmolzenen Bahn aus einem thermoplastischen filmbildenden Polymer (12) auf der Oberfläche (22) einer rotierenden Gießtrommel (16) mit gegebener Manteldicke relativ zu deren Durchmesser, Kühlen der geschmolzenen Bahn (12) auf der Gießfläche (22) der Trommel auf eine Temperatur und Tiefe, die zum Abstreifen der Bahn von der Gießfläche (22) ausreichend sind, durch Abkühlen der Trommel (16) und anschließendes Abstreifen der Bahn (12) von der Gießfläche (22), dadurch gekennzeichnet, daß eine Gießtrommel (16) bereitgestellt ist, bei der für gegebene Werte des Durchmessers, der Rotationsgeschwindigkeit und der Kühlrate die Manteldicke eine solche ist, daß die Oberfläche der geschmolzenen Bahn im Kontakt mit der Gießtrommel (16) auf eine Temperatur unterhalb der Glasübergangstemperatur des Polymers bis zu einer Tiefe gekühlt wird, die 25% der Dicke der gegossenen Polymer-Bahn nicht überschreitet, jedoch noch wirksam ist, um eine maximale permanente örtliche Verformung des Mantels der Gießtrommel von etwa 0,002 Zoll (0,051 mm) in radialer Richtung an dem Punkt zu erzeugen, an dem das geschmolzene Polymer zuerst mit der Oberfläche der Trommel in Berührung gelangt.

2. Verfahren nach Anspruch 1, dadurch gekennzeichnet, daß das Polymer Polyethylenterephthalat ist und die geschmolzene Bahn (12) bei einer Temperatur von wenigstens 265°C gegossen wird.

3. Verfahren nach Anspruch 1 oder Anspruch 2, dadurch gekennzeichnet, daß die Oberfläche der geschmolzenen Bahn (12) von der Gießtrommel (16) entfernt durch Kontakt mit einem gasförmigen oder flüssigen Kühlmittel insgesamt auf der Gießfläche (22) gekühlt und gehärtet wird.

4. Verfahren nach irgendeinem der Ansprüche 1 bis 3, dadurch gekennzeichnet, daß die Gießtrommel (16) eine Manteldicke von etwa 0,7 Zoll (17,8 mm) und einen Durchmesser von etwa 5 Fuß (1,5 m) aufweist.

5. Gießtrommel (16) zur Verwendung bei der Bildung einer selbsttragenden Folie aus einem thermoplastischen Polymer zum Kühlen auf dessen Deformationspunkt, umfassend: ein Hohlkörperelement mit einem röhrenförmigen Teil aus wärmeleitfähige Material, das einen Mantel (10) bildet, dessen gekrümmte äußere Oberfläche eine Gießfläche (22) bildet, auf die beim Einsatz ein Strom des geschmolzenen thermoplastischen Polymers abgelagert werden soll, und mit Endwandungen aus wärmeleitfähigem Material, die im wesentlichen die Enden des röhrenförmigens Teils schließen und unmittelbar mit diesen wärmeleitfähig verbunden sind, Mittel zum Unterstützen des Hohlkörperelements zur Rotation um die Achse (24) des röhrenförmigen Teils und Mittel zum Füllen des Hohlkörperelements (27, 31, 25) mit einer Kühlflüssigkeit und zur Kreislaufführung der Kühlflüssigkeit (26) in das Hohlkörperelement hinein und aus diesem heraus währen der Rotation desselben, um die Temperatur der Gießfläche zu steuern, dadurch gekennzeichnet, daß die Gießtrommel (16) eine Manteldicke von etwa 0,7 Zoll (17,8 mm) und einen Durchmesser von etwa 5 Fuß (1,5 m) aufweist.

## Revendications

1. Procédé de formation d'un film de polymère, selon lequel on coule une nappe fondue d'un polymère filmogène thermoplastique (12) sur la surface (22) d'une roue de coulée tournante (16) ayant une épaisseur de coquille donnée relativement à son diamètre, on refroidit la nappe fondue (12) sur la surface de coulée (22) de la roue à une température et à une profondeur suffisantes pour permettre de la détacher de cette surface de coulée (22) par un refroidissement de la roue (16), et ensuite on détache la nappe (12) de la surface de coulée (22), caractérisé par le fait que l'on prévoit une roue de coulée (16) présentant, pour un diamètre, une vitesse de rotation et une vitesse de rotation données, une épaisseur de coquille est telle que la surface de la nappe fondue en contact avec la roue de coulée (16) se refroidit jusqu'à une température inférieure à la température de transition vitreuse du polymère sur une profondeur ne dépassant pas 25% de l'épaisseur de la nappe de polymère telle qu'elle est coulée, tout en étant capable d'assurer que le maximum de déformation locale permanente de la coquille de la roue, au point où le polymère fondu entre en contact pour la première fois avec la surface de la roue, soit d'environ 0,002 pouces (0,051 mm) dans la direction radiale.

2. Procédé selon la revendication 1, dans lequel le polymère est le polytéréphtalate d'éthylène et on coule la nappe fondue (12) à une température d'au moins 265°C.

3. Procédé selon l'une des revendications 1 et 2, dans lequel on refroidit et on durcit complètement sur la surface de coulée (22) la surface de la nappe fondue (12) opposée à la roue de coulée (16) par contact avec un agent de refroidissement gazeux ou liquide.

4. Procédé selon l'une quelconque des revendications 1 à 3, dans lequel la roue de coulée (16) a une épaisseur de coquille d'environ 0,7 pouces (17,8 mm) et un diamètre d'environ 5 pieds (1,5 m).

5. Roue (16) destinée à être utilisée dans la formation d'un film de polymère thermoplastique pour le refroidissement de celui-ci à son point de solidification, comprenant: un corps creux comportant une partie tubulaire formant une coquille (10) de matière conductrice de la chaleur, dont la surface extérieure courbe forme une surface de coulée (22) sur laquelle on doit déposer, lors de l'utilisation, un courant de polymère thermoplastique fondu, et des parois terminales en matière conductrice de la chaleur fermant sensiblement les extrémités de la partie tubulaire et reliées directement à celle-ci de manière à être en relation de conduction de chaleur avec elle; des moyens pour supporter ce corps pour sa rotation autour de l'axe (24) de la partie tubulaire; et des moyens pour remplir le corps creux (27, 31, 25) d'un liquide de refroidissement (26) et pour faire circuler ce dernier en la faisant entrer dans le corps et en l'en faisant sortir pendant qu'il tourne afin de régler la température de la surface de coulée, caractérisée par le fait que la roue de coulée (16) a une épaisseur de coquille d'environ 0,7 pouces (17,8 mm) et un diamètre d'environ 5 pieds (1,5 m).

FIG. 1

0 065 415

# F I G. 2

40

16

# F I G. 3

40

16a

16b

# F I G. 4

40

# F I G. 5

40

16b

16a

**0 065 415**

# F I G . 6

Capacity in LBS/HR/INCH of WIDTH vs. WHEEL SHELL THICKNESS IN INCHES

Legend:
- H= 368 T= 285
- THEORETICAL MAXIMUM

NO. 1

NO. 2